(19) Europäisches Patentamt / European Patent Office / Office européen des brevets

(11) **EP 1 669 641 B1**

(12) **FASCICULE DE BREVET EUROPEEN**

(45) Date de publication et mention
de la délivrance du brevet:
**26.12.2007 Bulletin 2007/52**

(51) Int Cl.:
***F16H 59/62*** *(2006.01)*

(21) Numéro de dépôt: **05300122.8**

(22) Date de dépôt: **16.02.2005**

(54) **Procédé de contrôle d'une transmission en fonction de l'altitude**

Verfahren zum Steuern eines Getriebes in Abhängigkeit von der Höhe

Method for controlling a transmission according to altitude

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.02.2004 FR 0450270**

(43) Date de publication de la demande:
**14.06.2006 Bulletin 2006/24**

(73) Titulaire: **RENAULT S.A.S.**
**92100 Boulogne Billancourt (FR)**

(72) Inventeurs:
• **Poisson, Carine**
**93160 Noisy-Le-Grand (FR)**
• **Taffin, Christian**
**78320 Le Mesnil Saint Denis (FR)**

(56) Documents cités:
**EP-A- 0 501 746        EP-A- 0 992 780**
**DE-A- 19 542 046       US-A- 4 803 966**
**US-A- 4 943 921        US-A- 5 269 203**
**US-B1- 6 390 055**

## Description

La présente invention concerne le contrôle des transmissions automatiques ou automatisées à rapports étagés ou à variation continue, à passages de vitesse sous couple ou avec rupture de couple, en fonction de l'altitude.

Il a déjà été proposé de tenir compte de l'altitude dans la commande de transmissions automatiques. Ainsi la publication US 4 943 921 prévoit de corriger les seuils de vitesse des lois de passage en fonction de l'altitude. Selon cette publication, l'altitude est mesurée. Les corrections prennent en compte l'impact de l'altitude sur le comportement du véhicule, à partir d'une mesure de celle-ci.

La publication DE-A-195 42 046 décrit un procédé de contrôle d'une transmission automatique en fonction de l'altitude selon le préambule de la revendication indépendante 1.

La présente invention part de l'observation que la diminution du couple disponible, appelée aussi déchéance de couple, induite par l'altitude, a un effet sur les prestations de brio au décodage en pente, sur les relances à basses vitesses (points de rétrogradage en kick down, ...).

Sur ce constat, l'invention vise à contrôler le fonctionnement d'une transmission automatique à partir d'une valeur d'altitude calculée.

Dans ce but, elle propose d'estimer l'altitude en considérant la déchéance de couple qu'elle induit, et de prendre en compte l'altitude ainsi calculée, dans les stratégies de commande d'une transmission.

Cette transmission peut être de tout type, automatique ou automatisée à rapports étagés ou à variation continue, à passages de vitesse sous couple ou avec rupture de couple.

Conformément à l'invention, l'altitude est estimée à partir de l'écart entre le couple moyen effectif du moteur en situation de saturation de couple, et un couple moteur de référence théoriquement disponible au point de fonctionnement considéré à l'altitude, 0.

De préférence, l'altitude est estimée grâce à une cartographie fonction d'un ratio de déchéance de couple,

L'invention sera mieux comprise à la lecture de la description suivante d'un mode de réalisation non limitatif de celle-ci.

On peut calculer la valeur du couple moyen effectif CME du moteur (couple estimé en sortie moteur déterminé par le contrôle, moteur et envoyé au contrôleur, de la transmission automatisée).

Selon l'invention, cette valeur est prise en compte, ainsi qu'une valeur du couple moteur théorique à l'altitude 0, calculée par exemple grâce à une cartographie établie sur banc d'essais.

Selon des critères retenus par l'invention, la saturation de couple est détectée lorsque la position pédale est supérieure à un seuil d'enfoncement, et que la différence entre le couple effectif du moteur et le couple maximum instantané est relativement faible.

On observe par ailleurs que l'écart entre le couple effectif du moteur et le couple théorique cartographié, est proportionnel à l'altitude.

Le phénomène, de saturation apparaît à des valeurs d'enfoncement de pédale d'accélérateur (ou charge moteur) plus faibles quand l'altitude augmente. Un tel comportement est en effet normal pour un moteur, étant donné que l'altitude a pour effet de réduire la courbe de couple maximum disponible du moteur, et de diminuer ainsi les performances du moteur.

On peut donc calculer la déchéance de couple par rapport à un couple de référence $C_R$, lui-même calculé par exemple à partir à partir d'une cartographie moteur fonction de la position pédale et du régime moteur.

Le couple de référence $C_R$ est ensuite filtré, afin d'être phasé avec le couple moyen effectif du moteur CME.

Le ratio de déchéance de couple est :

$$\frac{Couple\_référence - CME}{Couple\_référence}$$

Il est donc filtré, avant d'effectuer le calcul de la déchéance de couple, de préférence sous certaines conditions telles que :

- la boîte de vitesses automatique ou automatisée ne fait pas de requête de couple ;
- le système de contrôle de trajectoire ne fait pas de requête de couple ;
- il n'y a pas de défaut sur l'information CME (couple moyen effectif du moteur) émise par le contrôle moteur ;
- il n'y a pas de défaut sur la position pédale ou sur le régime moteur ;
- on est en saturation : c'est-à-dire que la position pédale est supérieure à un seuil, et la différence entre le CME et le Cmax instantané est faible.

Comme indiqué plus haut, l'altitude est proportionnelle au ratio de déchéance. Grâce à l'invention, on peut ainsi estimer l'altitude grâce à une cartographie fonction de ce ratio.

## Revendications

1. Procédé de contrôle d'une transmission automatique en f onct ion de l'altitude, reposant sur une estimation de l'altitude, **caractérisé**

    - **en ce que** l'altitude est estimée à partir d'un ratio de déchéance de couple, égal au rapport de l'écart entre le couple moyen effectif CME du moteur en situation de saturation de couple, et un couple de référence Cr théoriquement disponible au point de fonctionnement considéré à l'altitude zéro, calculé, à partir d'une cartographie moteur fonction de la position pédale d'accélérateur et du régime moteur, sur ledit couple de référence Cr,

- et **en ce que**, l'alt it ude ainsi calculée est prise en compte dans les st rat égies de commande de la transmission.

2. Procédé de contrôle selon la revendication 1, **caractérisé en ce que** l'altitude est estimée grâce à une cartographie fonction du ratio de déchéance de couple.

3. Procédé de contrôle selon la revendication 2, **caractérisé en ce que** le ratio de déchéance est filtré pour être mis en phase avec le couple moyen effectif du moteur CME.

4. Procédé de contrôle selon la revendication 1, 2 ou 3, **caractérisé en ce que** la saturation de couple est détectée lorsque la position pédale d'accélérateur est supérieure à un seuil d'enfoncement, et que la différence entre le couple effectif du moteur et le couple maximum instantané du moteur est relativement faible.

**Claims**

1. Method of controlling an automatic transmission according to the altitude, which is based on an estimation of the altitude, **characterized**

- **in that** the altitude is estimated from a torque loss ratio, which is equal to the ratio of the difference between the mean effective torque MET of the engine in a torque saturation situation and a reference torque Cr theoretically available at the operating point considered at zero altitude, calculated from an engine map which is a function of the accelerator pedal position and of the engine speed, to the said reference torque Cr,
- and **in that** the altitude thus calculated is taken into account in the transmission control strategies.

2. Control method according to Claim 1, **characterized in that** the altitude is estimated using a map which is a function of the torque loss ratio.

3. Control method according to Claim 2, **characterized in that** the loss ratio is filtered so as to be phased with the mean effective torque MET of the engine.

4. Control method according to Claim 1, 2 or 3, **characterized in that** the torque saturation is detected when the accelerator pedal position is above a depression threshold and when the difference between the effective torque of the engine and the instantaneous maximum torque of the engine is relatively small.

**Patentansprüche**

1. Verfahren zum Steuern eines Automatikgetriebes in Abhängigkeit von der Höhe über dem Meeresspiegel, die auf einer Schätzung der Höhe beruht, **dadurch gekennzeichnet, dass**

- die Höhe ausgehend von einer Drehmomentverlust-Kennzahl gleich dem Verhältnis der Differenz zwischen dem mittleren effektiven Drehmoment CME des Motors in einer Sättigungssituation des Drehmoments und einem Bezugsdrehmoment Cr, das theoretisch am betrachteten Betriebspunkt auf Meereshöhe verfügbar wäre, geschätzt wird, der ausgehend von einer Motor-Kartographie, die von der Gaspedalstellung und der Motordrehzahl abhängt, am Bezugsdrehmoment Cr berechnet wird,
- und dass die so berechnete Höhe bei den Steuerstrategien des Getriebes berücksichtigt wird.

2. Steuerverfahren nach Anspruch 1, **dadurch gekennzeichnet, dass** die Höhe mit Hilfe einer Kartographie geschätzt wird, die von der Drehmomentverlust-Kennzahl abhängt.

3. Steuerverfahren nach Anspruch 2, **dadurch gekennzeichnet, dass** die Verlustkennzahl gefiltert wird, um mit dem mittleren effektiven Drehmoment CME des Motors in Phase gebracht zu werden.

4. Steuerverfahren nach Anspruch 1, 2 oder 3, **dadurch gekennzeichnet, dass** die Drehmomentsättigung erfasst wird, wenn die Gaspedalstellung höher als eine Eindrückschwelle ist und wenn die Differenz zwischen dem effektiven Motordrehmoment und dem augenblicklichen maximalen Drehmoment des Motors relativ gering ist.

**EP 1 669 641 B1**

**RÉFÉRENCES CITÉES DANS LA DESCRIPTION**

**Documents brevets cités dans la description**

- US 4943921 A
- DE 19542046 A